**Europäisches Patentamt**

**European Patent Office**

**Office européen des brevets**

(19)

(11) Veröffentlichungsnummer: **0 077 964**

**B1**

(12) # EUROPÄISCHE PATENTSCHRIFT

(45) Veröffentlichungstag der Patentschrift:
02.07.86

(21) Anmeldenummer: 82109386.1

(22) Anmeldetag: 11.10.82

(51) Int. Cl.⁴: **C 08 G 18/66,** C 08 G 18/78, C 08 G 18/80, C 08 G 18/38, C 08 G 18/14, C 08 G 18/42, F 17 C 3/06, C 08 J 9/00

(54) **Verfahren zur Herstellung von flammfesten, kaltzähen Polyurethanschaumstoffen und deren Verwendung als Innenauskleidung von Lagertanks.**

(30) Priorität: 24.10.81 DE 3142229

(43) Veröffentlichungstag der Anmeldung:
04.05.83 Patentblatt 83/18

(45) Bekanntmachung des Hinweises auf die Patenterteilung:
02.07.86 Patentblatt 86/27

(84) Benannte Vertragsstaaten:
BE DE FR GB IT

(56) Entgegenhaltungen:
FR-A-1 547 140
FR-A-1 561 553
US-A-3 235 517
US-A-3 929 247
US-A-4 088 615

(73) Patentinhaber: BAYER AG, Konzernverwaltung RP Patentabteilung, D-5090 Leverkusen 1 Bayerwerk (DE)

(72) Erfinder: Zöllner, Robert, Dr., Heinrich- von- Kleist- Strasse 10, D-5090 Leverkusen 1 (DE)
Erfinder: Godthardt, Lutz- Peter, Immenweg 10, D-5090 Leverkusen (DE)
Erfinder: Andres, Karlheinz, Dr., Leopold- Gmelin- Strasse 22, D-5000 Köln 80 (DE)
Erfinder: Schmidt, Wolfgang, Dr., Leopold- Gmelin- Strasse 44, D-5000 Köln 80 (DE)

**Beschreibung**

Es ist bekannt, Polyurethaneschaumstoffe auf der Basis von Polyisocyanaten, Polyhydoxyverbindungen, Treibmitteln sowie Zusatz- und Hilfsstoffen zu erzeugen. Diese Schaumstoffe finden je nach Elastizitätsgrad Verwendung z.B. für Polsterzwecke oder als Isolationsmaterial.

Überraschenderweise wurden neue Kombinationen gefunden die zu kaltzähen Polyurethanschaumstoffen führen. Diese zeichnen sich durch Beständigkeit bei tiefen Temperaturen bis -196°C (flüssiger Stickstoff) aus, d.h. es treten keine erkennbaren Spannungen auf. Gleichzeitig bleibt die hervorragende Isolationswirkung geschlossenzelliger Polyurethanschaumstoffe erhalten. Gegenstand der Erfindung ist somit ein Verfahren zur Herstellung von flammfesten, kaltzähen Polyurethanschaumstoffen durch Umsetzung von Polyisocyanaten mit mindestens zwei Hydroxylgruppen aufweisenden höhermolekularen Verbindungen einer OH-Zahl von 150 - 300 in Gegenwart von mindestens 2 aktive Wasserstoffatome aufweisenden Kettenverlängerungs- und Vernetzungsmitteln, Treibmitteln, Aktivatoren und phosphorhaltigen Verbindungen, gegebenenfalls in Gegenwart von an sich bekannten Hilfs- und Zusatzstoffen, dadurch gekennzeichnet, daß

1. als Polyisocyanat ein modifiziertes, vorzugsweise Carbodiimidgruppen aufweisendes Diphenylmethandiiscoyanat.

2. als mindestens zwei Hydroxylgruppen aufweisende höhermolekulare Verbindung ein Polyester und

3. als Kettenverlängerungs- und Vernetzungsmittel
a) ein $C_2$-$C_6$-Alkandiol und gegebenfalls
b) ein mindestens drei Hydroxylgruppen aufweisendes Addukt einer OH-Zahl von 400-800 eines Alkylenoxids an eine Aminoverbindung verwendet werden.

Die Herstellung der Schaumstoffe nach dem Sprühverfahren ist bevorzugt.

Die Erfindung betrifft auch die Verwendung der so hergestellten Polyurethanschaumstoffe als Innenauskleidung von Lagertanks für verflüssigtes Methan, Ethan oder Propan.

Als modifizierte Polyisocyanate kommen solche auf Basis von reinem oder technischem Diphenylmethandiiscyanat ("rohes MDI") infrage, die Carbodiimidgruppen, Urethangruppen, Allophanatgruppen, Isocyanuratgruppen, Harnstoffgruppen und/oder Biuretgruppen aufweisen.

Die erfindungsgemäß infrage kommenden Hydroxylgruppen aufweisenden Polyester einer OH-Zahl von 150-300 sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-Bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octan-diol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylénglykole infrage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Als $C_2$-$C_6$-Alkandiole kommen z.B. Ethylenglykol, Propandiol, Butandiol, Pentandiol, Hexandiol, verzweigt und unverzweigt, infrage.

Die mindestens drei Hydroxylgruppen aufweisenden Addukte eines Alkylenoxids an eine Aminoverbindung leiten sich einerseits z.B. von Ethylenoxid, Propylenoxid oder Butylenoxid für sich oder in Mischung ab, andererseits werden z.B. Ammoniak, Ethylendiamin, Anilin oder Toluylendiamin eingesetzt.

Die erfindungsgemäß einzusetzenden phosphorhaltigen Verbindungen sind an sich bekannt und umfassen insbesondere die Säuren und Ester der Phosporsäure und der phosporigen Säure sowie die Ester der Phosphonsäure. N,N-Bis-(2-hydroxyethyl)-amino-methan-phonsäure-diethylester ist besonders bevorzugt.

Als Treibmittel werden Wasser und/oder leicht flüchtige anorganische oder organische Substanzen eingesetzt. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, $CO_2$ oder $N_2O$, infrage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510, beschrieben.

Folgende Katalysatoren kommen erfindungsgemäß z.B. infrage:

Katalysatoren der an sich bekannten Art, z.B. tertiäre Amine, wie Triethylamin, Tributylamin, N-Methyl-morpholin, N-Ethylmorpholin, N,N,N',N'-Tetramethylethylendiamin, Pentamethyldiethylentriamin und höhere Homologe (DE-Offenlegungsschriften 2 624 527 und 2 624 528), 1,4-Diazabicyclo-(2,2,2)-octan, N-Methyl-N'-dimethylaminoethylpiperazin, Bis-(dimethylaminoalkyl)-piperazine (DE-Offenlegungsschrift 2 636 787), N,N-Dimethylbenzylamin, N,N:Dimethylcyclohexylamin, N,N-Diethylbenzylamin, Bis (N,N-diethylaminoethyl)adipat, N,N,N',N'-Tetramethyl-1,3-butandiamin, N,N-Dimethyl-β-phenyl-ethylamin, 1,2-Dimethylimidazol, 1-Methylimidazol, monocyclische und bicyclische Amidine (DE-Offenlegungsschrift 1 720 633), Bis-(dialkylamino) alkylether (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Amine, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, infrage.

Gegenüber Isocyanatgruppen aktive Wasserstoffatome aufweisende tertiäre Amine als Katalysator sind z.B:

Triethanolamin, Triisopropanolamin, N-Methyldiethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, infrage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch substituierte Hexahydrotriazine können als Katalysatoren eingesetzt werden (DE-Offenlegungsschrift 1 769 043)

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn(II)-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungßschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102,beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Erfindungsgemäß werden gegebenenfalls mitverwendet:

Oberflächenaktive Zusatzstoffe, wie Emulgatoren und Schaumstabilisatoren. Als Emulgatoren kommen z.B. die Natriumsalze von Ricinusöl-sulfonsäuren oder Salze von Fettsäuren mit Aminen wie ölsaures Diethylamin oder stearinsaures Diethanolamin infrage. Auch Alkali- oder Ammoniumsalze von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen- Copolymere gemäß DE-Offenlegungsschrift 2 558 523.

Erfindungsgemäß werden gegebenenfalls ferner mitverwendet:

Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Bei der Schaumstoffherstellung kann erfindungsgemäß die Verschäumung auch in geschlossenen Formen durchgeführt werden.

Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper.

Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overchanging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung:

Dämmschichten, die sich für Innenauskleidungen von Lagertanks zur Aufnahme von verflüssigtem Propan oder Methan eignen. Ebenso können sogenannte Auffangtassen, zur Sicherheit solcher Lagertanks eingesetzt, mit Schaumstoffen der beanspruchten Art versehen werden. Auch Schiffsisolierungen im Bereich des Transports von verflüssigtem Propan oder Methan lassen sich auf diese Weise herstellen.

Weitere Einzelheiten können den nachfolgenden Beispielen entnommen werden. Die angegebenen Teile sind Gewichtsteile.

**Beispiel 1**

Es wird eine Mischung hergestellt aus 50 Teilen eines Polyesters (aufgebaut auf 40 Mol Adipinsäure, 8 Mol Phthalsäureanhydrid, 41 Mol 1,2-Propylenglykol und 16 Mol Glycerin), OH-Zahl 210, 10 Teilen Butandiol-1,4, OH-Zahl 1250, 20 Teilen eines Aminopolyethers (aufgebaut auf 1 Mol Ethylendiamin, Ethylenoxid und Propylenoxid im Verhältnis 43: 57), OH-Zahl 650, 20 Teilen N,N-Bis (2-hydroxyethyl)-amino-methan-phosphon-säurediethylester, OH-Zahl 450, 1 Teil eines Polysiloxan-Stabilisators und 0,5 Teilen Katalysator (Dibutyl-zinn(IV)-dilaurat: Triethylamin, Gewichtsverhältnis 6:1). 100 Teile dieser Mischung versetzt man mit 25 Teilen Monofluortrichlormethan und 130 Teilen eines Carbodiimidgruppenhaltigen 4,4'-Diphenylmethandiisocyanates (NCO-Wert: 30 %).

Der Schaumstoff wird nach dem Sprühverfahren erzeugt. Er hat kaltzähe Eigenschaften und zeigt bei der Einwirkung von flüssigem Stickstoff keine Veränderungen, sowohl an der Oberfläche als auch im Innern.

**Beispiel 2**

Es wird eine Mischung hergestellt aus 50 Teilen eines Polyesters gemäß Beispiel 1, 10 Teilen Butandiol-1,4, OH-Zahl 1250, 20 Teilen eines Aminopolyethers gemäß Beispiel 1, 20 Teilen N,N-Bis(2-hydroxypropyl)-amino-methan-phosphonsäuredimethylester, OH-Zahl 430, 1 Teil eines Polysiloxan-Stabilisators und 0,5 Teilen Katalysator (Dibutyl-zinn(IV)-dilaurat:Triethylamin, Gewichtsverhältnis 6:1). 100 Teile dieser Mischung versetzt man mit 25 Teilen Monofluortrichlormethan und 125 Teilen eines Carbodiimidgruppenhaltigen 4,4'-Diphenylmethandiisocyanates (NCO-Wert: 30 %).

Der Schaumstoff wird nach dem Sprühverfahren erzeugt. Er hat kaltzähe Eigenschaften und zeigt bei der Einwirkung von flüssigem Stickstoff keine Veränderungen, sowohl an der Oberfläche als auch im Innern.

**Beispiel 3**

Es wird eine Mischung hergestellt aus 50 Teilen eines Polyesters gemäß Beispiel 1, 10 Teilen Butandiol-1,4, OH-Zahl 1250, 20 Teilen eines Aminopolyethers (aufgebaut auf 1 Mol Ethylendiamin und Propylenoxid), OH-Zahl 630, 20 Teilen N,N-Bis (2-hydroxy-ethyl)-amino-methan-phosphonsäurediethylester, OH-Zahl 450, 1 Teil eines Polysiloxan-Stabilisators und 0,5 Teilen Katalysator (Dibutyl-zinn (IV) dilaurant: Triethylamin, Gew.-Verhältnis 6:1). 100 Teile dieser Mischung versetzt man mit 25 Teilen Monofluortrichlormethan und 130 Teilen eines Carbodiimidgruppenhaltigen 4,4'-Diphenylmethandiisocyanates (NCO-Wert: 30 %).

Der Schaumstoff wird nach dem Sprühverfahren erzeugt.

Er hat kaltzähe Eigenschaften und zeigt bei der Einwirkung von flüssigem Stickstoff keine Veränderungen, sowohl an der Oberfläche als auch im Innern.

**Patentansprüche**

1) Verfahren zur Herstellung von flammfesten, kaltzähen Polyurethanschaumstoffen durch Umsetzung von Polyisocyanaten mit mindestens zwei Hydroxylgruppen aufweisenden höhermolekularen Verbindungen einer OH-Zahl von 150: 300 in Gegenwart von mindestens zwei aktive Wasserstoffatome aufweisenden Kettenverlängerungs- und Vernetzungsmitteln, Treibmitteln, Aktivatoren und phosphorhaltigen Verbindungen, gegebenenfalls in Gegenwart von an sich bekannten Hilfs- und Zusatzstoffen, dadurch gekennzeichnet, daß

1. als Polyisocyanat ein modifiziertes Diphenylmethandiisocyanat,

2. als mindestens zwei Hydroxylgruppen aufweisende höhermolekulare Verbindung ein Polyester und

3. als Kettenverlängerungs- und Vernetzungsmittel

a) ein $C_2$-$C_6$-Alkandiol und gegebenen-falls

b) ein mindestens drei Hydroxylgruppen aufweisendes Addukt einer OR-Zahl von 400 - 800 eines Alkylenoxids an eine Aminoverbindung verwendet werden.

2) Verfahren gemäß Anspruch 1, dadurch gekennzeichnet, daß als modifiziertes Diphenylmethandiisocyanat ein Carbodiimidgruppen aufweisendes Diphenylmethandiisocyanat verwendet wird.

3) Verfahren gemäß Anspruch 1, dadurch gekennzeichnet, daß die Herstellung der Schaumstoffe nach dem Sprühverfahren erfolgt.

4) Verwendung der nach den Verfahren gemäß Anspruch 1 bis 3 erhaltenen Polyurathanschaumstoffe als Innenauskleidung von Lagertanks für verflüssigtes Methan, Ethan oder Propan.

**Claims**

1. Process for the production of flameproof, cold-resistant polyurethane foams by reacting polyisocyanates with relatively high molecular weight compounds containing at least two hydroxyl groups and having an OH number of 150 - 300 in the presence of chain-lengthening and crosslinking agents containing at least two active hydrogen atoms, blowing agents, activators and phosphorus containing compounds, optionally in the presence of auxiliaries and additives known per se, characterised in that

1. a modified diphenylmethane diiscyanate is used as the polyisocyanate,

2. a polyester is used as the relativly high molecular weight compound containing at least two hydroxyl groups and

3. a) a $C_2$-$C_6$-alkanediol and optionally

b) an adduct of an alkylene oxide and an amino compound containing at least three hydroxyl groups and having an OH number of 400-800 are used as the chain-lengthening and crosslinking agents.

2. Process according to Claims 1, charcterised in that a diphenylmethane diisocyanate containing carbodiimide groups is used as the modified diphenylmethane diiscoyanate.

3. Process according to Claims 1, characterised in that the foams are produced by the spraying process.

4. Use of the polyurethane foams cbtained by the processes according to Claims 1 to 3 for lining
the interior of storage tanks for liquefied
methane, ethane or propane.

## Revendications

1. Procédé de fabrication de mousses de
polyuréthanes ignifuges et tenaces à froid par
réaction de polyisocyanates avec des composés
de poids moléculaire très élevé, d'un indice OH
de 150-300 et comportant au moins deux groupes
hydroxy, en présence de composés contenant du
phosphore, d'activateurs, d'agents moussants,
d'agents de réticulation et d'agents
d'allongement de chaîne comportant au moins
deux atomes d'hydrogène actifs, éventuellement
en présence de substances auxiliaires et
d'additifs connus en soi, caractérisé en ce que:
    1. comme polyisocyanate, on utilise un
diphénylméthanediisocyanate modifié,
    2. comme composé de poids moléculaire très
élevé comportant au moins deux groupes hydroxy,
on utilise un polyester et
    3. comme agent de réticulation et
d'allongement de chaîne, on utilise
    a) un alcane-diol en $C_2C_6$ et éventuellement
    b) un produit d'addition (comportant au moins
trois groupes hydroxy et ayant un indice OH de
400-800) d'un oxyde d'alkylène à un composé
amine.

2. Procédé selon la revendication 1, caractérisé
en ce que, comme diphénylmethane-diisocyanate
modifié, on utilise un diphénylméthanediisocysnate comportant des groupes
carbodiimide.

3. Procédé selon la revendication 1, caractérisé
en ce que la fabrication des mousses a lieu selon
le procédé par pulvérisation.

4. Utilisation des mousses de polyuréthanes
obtenues suivant le procédé selon les
revendications 1 à 3 comme revêtement intérieur
de réservoirs de stockage pour le méthane,
l'éthane ou le propane liquéfié.